Europäisches Patentamt

European Patent Office

Office européen des brevets

(11) Publication number: 0 632 294 A1

# EUROPEAN PATENT APPLICATION

(21) Application number: 94303055.1

(51) Int. Cl.⁶: **G02B 5/08**, G02B 1/10

(22) Date of filing: 27.04.94

(30) Priority: **28.04.93 US 54540**

(43) Date of publication of application:
**04.01.95 Bulletin 95/01**

(84) Designated Contracting States:
**AT BE CH DE ES FR GB IT LI LU NL SE**

(71) Applicant: **THE BOC GROUP, INC.**
**575 Mountain Avenue**
**Murray Hill**
**New Jersey 07974 (US)**

(72) Inventor: **Wolfe, Jesse D.**
**3003 Pine Valley Road**
**San Ramon,**
**California 94583 (US)**
Inventor: **Vossen, John L.**
**1012 Sunset Ridge**
**Bridgewater,**
**New Jersey 08807 (US)**

(74) Representative: **Bousfield, Roger James et al**
**The BOC Group plc**
**Chertsey Road**
**Windlesham**
**Surrey GU20 6HJ (GB)**

(54) Mirrors.

(57) A first or second surface mirror comprising in order:
a substrate (20);
a first metal precoat layer (24);
a reflective metal layer (25);
a second metal precoat layer (26); and
a protective layer (27),
characterised in that the first metal precoat layer (24) comprises nickel and chromium or chromium nitride and the second metal precoat layer (26) comprises nickel and chromium or chromium nitride.

FIG.__2.

The present invention relates generally to mirrors, and more particularly, to front and back surface mirrors that are resistant to mechanical and chemical attack.

Most commercial mirrors are second surface mirrors comprising silvered glass composite structures wherein a thin layer of silver is deposited on the back or second surface of a glass substrate to reflect light. Silvered glass mirrors are generally desired because of their high visible reflectance and lack of colour. Because silver does not adhere well directly to glass, a relatively thin metal layer is applied to the glass surface prior to the application of the silver. To protect the silver from damage and degradation, especially from sulphur compounds such as $SO_2$ in the atmosphere, a protective coating is applied to its exposed surface. A common protective coating is a copper layer deposited over the silver followed by a thick paint spread over the copper layer. The lead in the paint apparently reacts with sulphur or sulphur compounds to form PbS. The copper layer interposed between the silver and paint layers enhances adhesion of the paint to the silver.

Second surface silvered glass mirrors are susceptible to a phenomenon called "black edge." This degradative process occurs when silver on the cut edge of the mirror is exposed to moisture. This leads to chemical corrosion, which forms a "black edge" on the mirror that moves progressively inward. This degradative process is even more prevalent and pronounced when silver mirrors are used in high humidity environments containing sulphur compound contaminants.

The above-described method of manufacturing second surface silver mirrors is also causing environmental concerns. Of primary concern is the lead and other chemicals in the waste products produced in the manufacturing process. For example, rinse water left over from the silvering process contains chemicals, silver, copper, and tin, and has been designated by the Environmental Protection Agency (EPA) as hazardous waste.

The paint used to back mirrors has to comply with certain industry requirements, but this also creates environmental problems. For example, as mentioned previously, a substratum coating of copper is first applied to the silver, making it necessary for the backing paint to possess adhesion and performance qualities in combination with the copper. Increasingly, many manufacturers are also demanding the paint be durable and to adhere well to the copper and silver underneath it. Thus far, the paints that meet all these requirements contain lead. Attempts have been made to develop a non-leaded paint to replace what is currently being used. However, a non-leaded paint substitute equivalent to the leaded products has not been developed.

Much of the hazardous waste lead is derived from the later stages in the manufacturing process when the edges of a fabricated mirror are ground. In effect, part of the mirror backing is ground as well. As a result, trace amounts of lead are found in the grinding water. Another problem associated with the use of lead paint is that there is no effective recycling of scrap mirrors due primarily to the existence of the lead.

Waste water treatment and other means of cleaning the lead, silver, and other hazardous materials from the effluents of mirror manufacturing facilities offer only a short term solution to the environmental problem.

The present invention is concerned with the provision of durable mirrors that are resistant to chemical attack and also with mirrors that can be manufactured without producing hazardous wastes. It is also concerned with he provision of mirrors that exhibit reflection over the visible region that is comparable to or that exceeds that of conventional second surface mirrors.

In accordance with the invention, there is provided a first or second surface mirror comprising in order:
a substrate;
a first metal precoat layer;
a reflective metal layer;
a second metal precoat layer; and
a protective layer,
characterised in that the first metal precoat layer comprises nickel and chromium or chromium nitride and the second metal precoat layer comprises nickel and chromium or chromium nitride.

This provides durable first and second mirrors each of which comprises a reflective metal layer that is situated between two metal precoat layers comprising either nickel- chromium alloy or a mixture of nickel and chromium nitride ($Ni-CrN_x$). The precoat layers are thin to minimise absorption of visible light but without sacrificing their adhesive properties.

In one embodiment of the invention, the first surface mirror comprises an aluminium substrate onto which is deposited a thin film consisting of seven layers, namely: titanium, nickel-chromium alloy, silver, $Ni-CrN_x$, silicon nitride, silicon dioxide, and titanium dioxide.

In an embodiment of the second surface mirror, the mirror comprises a glass substrate onto which is deposited a thin film design consisting of five layers, namely: silicon dioxide, $Ni-CrN_x$, silver, $Ni-CrN_x$, and silicon nitride.

Reference will now be made by way of exemplification only, to the accompanying drawings in which:

Figure 1 is a cross-sectional view of a prior art second surface silver mirror.

Figure 2 is a cross-sectional view of a first surface mirror of the invention.

Figure 3 is a cross-sectional view of a magnetron device.

Figure 4 is a cross-sectional view of a second surface mirror of the invention.

Figures 5 and 6 are graphs of percent reflectance vs wavelength for first surface mirrors.

Figure 7 is a graph of percent reflectance vs wavelength for a second surface mirror.

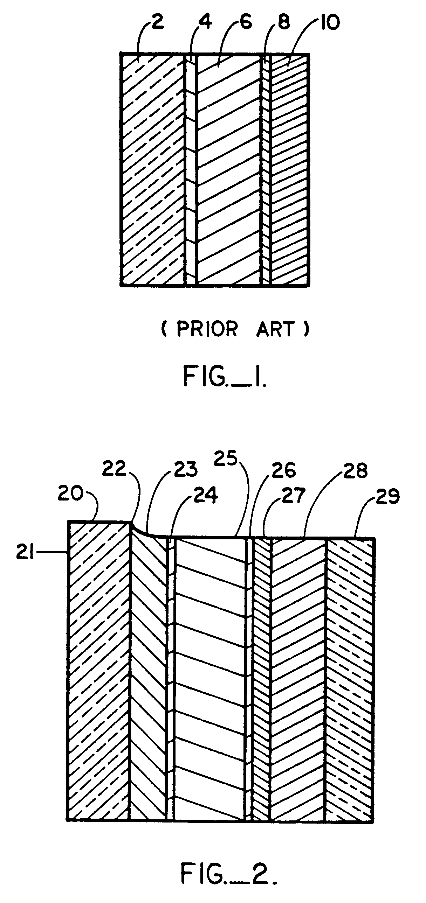

With reference to the drawings, a typical prior art second surface silver mirror structure is illustrated in Figure 1. (Second surface mirrors are also referred to as back surface mirrors.) The mirror is a composite structure having a glass substrate 2 with a layer of silver 6 coated on the glass substrate surface. A thin metal layer 4, usually consisting of tin, is deposited on the surface of the glass substrate prior to the silver to enhance adhesion of the silver layer to the glass substrate. A paint layer 10 is coated over the mirror to provide it with some protection from the environment. Because paint does not adhere very well to the silver, a thin copper layer 8 is first deposited on the silver layer, and thereafter paint is coated over the copper layer. For back surface mirrors, light enters through the substrate, reflects off the silver layer, and exits through the substrate.

A novel monolithic first surface mirror of the present invention is shown in Figure 2. (First surface mirrors are also referred to as front surface mirrors.) The mirror comprises a substrate 20 having a surface 21 which is the backside exposed to air and a surface 22 which is coated. The substrate is aluminium but it can be formed of any suitable materials that offer rigid support such as glass, plastic, metal, or wood.

The coating is formed of seven layers. The first layer 23 is a bonding layer which helps silver adhere to the aluminium. If the substrate is not aluminium, but rather is some other material to which silver adheres well, then the bonding layer is not necessary. The bonding layer comprises of any suitable material including titanium. The thickness of the bonding layer can range from approximately 20 to 1000 Å or more, and preferably from approximately 500 to 1000 Å.

Following the bonding layer is a first precoat layer 24 which has a thickness ranging from approximately 5 to 20 Å or more. Preferably, the first metal precoat layer comprises nickel-chromium alloy preferably comprising approximately 20% to 90% nickel and approximately 10% to 40% chromium; and more preferably the alloy content is approximately 80% nickel and 20% chromium. The alloy may contain small amounts (up to approximately 15%) of other metals as well. An alloy containing approximately 5% to 15% molybdenum is believed to further increase the chemical durability of the precoat layer. Nichrome (or NiCr) shall refer to alloys having various ratios of nickel, chromium, molybdenum, and other metals that can be used as the precoat layer. Alternatively, the precoat comprises a mixture of nickel metal and chromium nitride (designate as $Ni\text{-}CrN_x$ or nickel/chromium nitride) with a thickness preferably between approximately 8 to 15 Å or more. It has been found that a $Ni\text{-}CrN_x$ precoat layer can be thinner than a NiCr precoat layer and still accomplish its adhesive function.

When the substrate is aluminium or other material that the silver does not readily adhere to, instead of having a separate bonding layer, a thick first precoat layer having a total thickness of approximately 50 to 1000 Å or more can be used. This would obviate the need for the bonding layer. It should be emphasised that the bonding layer is generally not necessary with most substrates, including glass, plastics, and many metals, since silver will adhere to them with the assistance of a relatively thin (approximately 5 to 20 Å) first precoat layer.

Next, a reflective metal layer 25 is deposited onto the first precoat layer. The metal layer reflects visible light. The metal layer can be formed from a number of materials with silver being particularly satisfactory. Chromium is satisfactory because it produces a hard, corrosion-resistant mirror having a high visible reflectance with minimal colour. Nickel- chromium alloys and iron-nickel-chromium alloys, such as stainless steel, produce mirrors having similar high durability but slightly lower reflectance. Aluminium and rhodium produce mirrors having even higher reflectance than chromium, but aluminium layers are relatively soft and less corrosion-resistant, and rhodium is prohibitively expensive. The thickness of the metal layer ranges from approximately 500 to 1500 Å or more, and more preferably, from approximately 700 to 800 Å. When the metal layer comprises silver, the thickness should be from approximately 900 to 1500 Å or more, and more preferably from approximately 1000 to 1300 Å.

A second metal precoat layer 26 is then deposited onto the metal layer which is followed by protective layer 27. This second metal precoat layer can also comprise of a nickel-chromium alloy (as described above for the first precoat layer) but more preferably comprises $Ni\text{-}CrN_x$. The second precoat layer should preferably be maintained as thin as possible so that it will have very little, if any, adverse effect upon the optical characteristics of the mirror. Precoat layers with thicknesses ranging from approximately 5 to 20 Å have been satisfactory. When the second precoat layer comprises $Ni\text{-}CrN_x$, its thickness preferably should be approximately 8 to 15 Å. Because a Ni-CrN$_x$ layer can be thinner than a NiCr layer, a first surface mirror with Ni-CrN$_x$ as its second precoat layer has about a 2% higher reflectance than one with NiCr.

The protective layer 27 serves to protect the metal and second precoat layers from chemical attack, especially oxidation. The protective layer preferably comprises transparent nitrides such as silicon nitride and aluminium nitride, although aluminium nitride is less favourable since it is soluble in water. The protective layer has a thickness from approximately 20 to 100 Å, and more preferably from approximately 30 to 60 Å. Silicon nitride is formed by reactively sputtering a cylindrical magnetron. The silicon nitride used most preferably should exhibit low intrinsic stress. It was found that by reducing the intrinsic stress of the silicon nitride, an extremely hard and chemically resistant thin film is produced.

The next two layers in the coating consist first of a low refractive index dielectric layer 28 followed by a high refractive index dielectric layer 29. In this invention, a "low" refractive index is in the range 1.65 to 1.48 or less, and a "high" refractive index is in the range 2.0 to 2.5 or greater. The refractive index for various materials at a wavelength of 550 nm is given below in parenthesis. In this preferred embodiment, silicon dioxide (1.48) has been found to be particularly satisfactory as the low refractive index dielectric material and titanium dioxide (2.5) has been found to be particularly satisfactory as the high index dielectric material. Other dielectric materials which also can be utilised include niobium oxide, tantalum oxide, tin oxide, zinc oxide, and zirconium oxide. The thickness of the low refractive index dielectric layer ranges from approximately 500 to 1200 Å, and more preferably from approximately 615 to 920 Å. The thickness of the high refractive index dielectric layer ranges from approximately 400 to 800 Å, and more preferably from approximately 415 to 625 Å.

The use of the low and high refractive index dielectric layers increases the reflectance of the metal layer. For instance, the integrated reflectance of silver, which is approximately 98% of visible light, is reduced by the Ni-CrN$_x$ (or NiCr) second precoat layer to approximately 96% reflectance. However, by applying the low and high refractive index dielectric layers, the reflectance is enhanced to approximately 97% or greater. The extent of the enhancement depends upon the ratio of the high to the low refractive index. A ratio of 1.35 or greater is preferred because the embodiment of Figure 2 will enhance the reflectance of a silver layer to be 97% or greater from 450 to 590 nm, and provide an integrated visible reflectance of 97% or greater. Reflectance can be further enhanced by employing one or more additional series of low and high refractive index layers; however, the breadth of the enhanced region (i.e., band width) decreases. Furthermore, by varying the thicknesses of the dielectric layers and/or the selection of the dielectric material, it is possible to produce tinted front surface mirrors.

Instead of having a separate silicon nitride protective layer 27 and a low refractive index layer 28, a single silicon nitride layer 27 having a thickness from approximately 500 to 1200 Å, and more preferably from approximately 615 to 920 Å can be used instead, and the first surface mirror will still achieve comparable enhanced reflectance. It should also be emphasised that the use of the low and high refractive index dielectric layers 28 and 29 to enhance reflection for the inventive first surface mirror is optional. However, if layers 28 and 29 are not used, the first surface mirror will have less protection from the environment. To compensate for this, the thickness of the protective layer 27 can be increased although the percentage reflectance for the mirror will decrease with increasing thickness.

In a conventional second surface silver mirror, light is transmitted through the thick glass, reflected from the silver layer, and thereafter transmitted back through the thick glass. This creates double images that are readily apparent when objects are placed next to the glass of the mirror. Front or first surface mirrors of the present invention eliminate the double image problem as the light is not transmitted through the substrate and the dielectric layers through which light is transmitted are extremely thin in comparison to the glass found in conventional mirrors.

With conventional mirrors, the glass serves to protect the soft silver layer from the environment. With front surface mirrors of this invention, the thin dielectric layers that enhance reflectivity also serve as a protective coating.

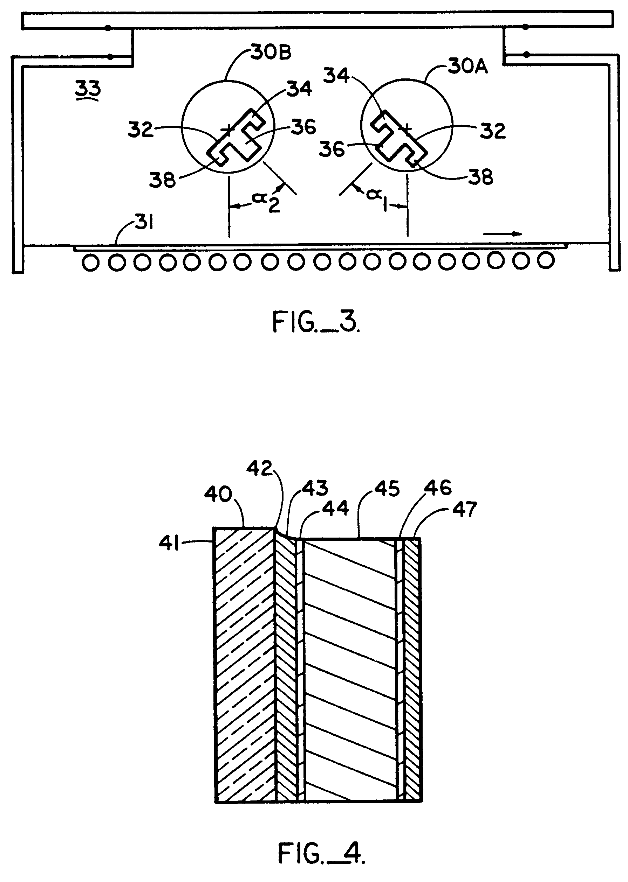

A second surface mirror incorporating the present invention is shown in Figure 4. (Second surface mirrors are also referred to as back surface mirrors.) The mirror comprises a substrate 40 having a surface 41 which is the backside exposed to air and a surface 42 which is coated. The substrate is soda lime glass but it can be formed of any suitable materials that is substantially transparent and that offer rigid support such as crystalline quartz, fused silica, and plastics such as polycarbonates and acrylates.

The coating is formed of six layers. The first layer is a substantially transparent barrier layer 43 which acts as a shield against contaminants that may attack the first metal precoat layer and/or reflective metal layer. For instance, soda lime glass contains sodium ions that can corrode the reflective metal layer. If the substrate is made of materials that (1) do not contain chemicals that may adversely affect the metal precoat and/or reflective metal layer and (2) is durable enough to prevent corrosives in the environment from

4

attacking the metal precoat and/or reflective metal layer, then barrier layer 43 is not needed. The barrier layer preferably comprises silicon oxide or aluminium oxide. The thickness of the barrier layer can range from approximately 50 to 300 Å, and preferably from approximately 50 to 100 Å.

Following the barrier layer is a first precoat layer 44 which preferably is maintained as thin as possible so that it will have very little, if any, adverse effect upon the optical characteristics of the mirror. Precoat layers with thicknesses ranging from approximately 5 to 20 Å have been satisfactory. Preferably, the first metal precoat layer comprises Ni-CrN$_x$ with a thickness of approximately 8 to 15 Å. Alternatively, the precoat comprises nichrome, as describe above. It has been found that a Ni-CrN$_x$ precoat layer can be thinner than a NiCr precoat layer and still accomplish its adhesive function.

Next, a reflective metal layer 45 is deposited onto the first precoat layer. The metal layer reflects visible light. The metal layer can be formed from a number of materials with silver being particularly satisfactory. Chromium, nickel-chromium alloys and iron-nickel-chromium alloys, such as stainless steel, aluminium, and rhodium can also be used for the reasons stated previously for the first surface mirror. The thickness of the reflective metal layer ranges from approximately 500 to 1300 Å or more, and more preferably, from approximately 800 to 1200 Å. When the metal layer comprises silver, the thickness should be from approximately 800 to 1400 Å or more, and more preferably from approximately 1000 to 1200 Å.

A second metal precoat layer 46 is then deposited onto the reflective metal layer which is followed by protective layer 47. This second metal precoat layer can also comprise of a nickel-chromium alloy or Ni-CrN$_x$. The second precoat layer has a thickness of approximately 5 to 500 Å or more, preferably approximately 5 to 20 Å, and when the second precoat layer is Ni-CrN$_x$ it should have a thickness of approximately 8 to 15 Å or more.

The protective layer 47 serves to protect the metal and second precoat layers from chemical attack, especially oxidation. The protective layer preferably comprises nitrides such as silicon nitride and aluminium nitride, although aluminium nitride is less favoured since it is soluble in water. The protective layer has a thickness from approximately 25 to 500 Å or more, and more preferably from approximately 50 to 75 Å. Silicon nitride is formed by reactively sputtering a cylindrical magnetron. The silicon nitride used most preferably should exhibit low intrinsic stress. It was found that by reducing the intrinsic stress of the silicon nitride, an extremely hard and chemically resistant thin film is produced.

To provide additional protection to the second surface mirror, a plastic laminate can be applied onto protective layer 47 - see US Patent Specification No. 4,965,121 the contents of which are incorporated herein. It has been found that a thick film of zinc deposited over layer 47 provides good sacrificial protection for the silver reflectance metal layer. Apparently, the zinc will react with the sulphur or sulphur compound contaminants to form ZnS.

For both the first and second surface mirrors, the NiCr (or Ni-CrN$_x$) precoat, barrier, protective, and high/low reflective index dielectric layers were deposited with a DC magnetron. The dielectric layers were prepared by DC-reactive sputtering with a rotating cylindrical magnetron. A description of a cylindrical magnetron suitable for depositing substrates with the dielectric materials such as SiO$_2$, Si$_3$N$_4$, and TiO$_2$ is found in US Patent Specification No. 5,047,131 the contents of which are incorporated herein by reference.

A cylindrical or planar magnetron wherein the target material is nichrome can be employed to reactively sputter the Ni-CrN$_x$ film in an atmosphere comprising of nitrogen and an inert gas such as argon. At typical DC sputtering temperatures, nickel does not form nitrides. (Without the nitrogen gas, a film comprising of nickel and chromium would be deposited instead.) Alternatively, the Ni-CrN$_x$ film can be deposited by using a magnetron with dual cathodes wherein one of the cathodes has a nickel target to sputter nickel and the other has a chromium target to reactively sputter the chromium nitride.

In depositing silicon nitride with dual rotatable cylindrical magnetrons, it was found that the intrinsic stress of the silicon nitride layer can be reduced by orienting the magnetic assembly of each cathode at an acute angle. As shown in Figure 3, which is a cross-sectional schematic view of a magnetron having dual cathodes 30A and 30B positioned in vacuum chamber 33. Each magnetic assembly 32 has a "W" configuration with three elongated magnetics 34, 36, and 38. The permanent magnetics formed an unbalanced system which is typical for rotatable cylindrical magnetrons. The magnetic assembly of cathode 30A is oriented at an acute angle $\alpha_1$ of approximately 45° so as to direct sputtered material towards the substrate 31 as it enters the deposition chamber. Similarly, the magnetic assembly of cathode 30B is oriented at an angle $\alpha_2$ of approximately 45°*. Each of angle $\alpha_1$ or $\alpha_2$ can range from approximately 20° to 60° independently, more preferably about 30° to 50° and most preferably about 45°. Each cathode is approximately 2.5 inches (6.35 cm) from the substrate and the centre of cathode 30A is approximately 8.5 inches (21.59 cm) from the centre of cathode 30B. Silicon nitride layers so deposited have approximately one-fourth the intrinsic stress of silicon nitride layers produced when the assembly is at a normal angle relative to the substrate. It is not necessary that dual cylindrical cathodes be employed to reactively sputter

$Si_3N_4$ but, if a single cathode is used, it is preferred that cathode 30A be employed with the substrate moving towards it.

The silver metal layer can be deposited by planar magnetrons, although other conventional methods such as evaporation can be employed. The titanium bonding layer can be deposited by a planar magnetron or by other conventional methods.

First and second surface mirrors having the structure as shown in Figures 2 and 4 were fabricated in an in-line magnetron system. The system comprises of magnetrons housed in vacuum chambers that are arranged in series, with each magnetron depositing one of the layers. Planar magnetrons were employed to deposit the bonding, precoat, and metal layers. The planar magnetrons, each comprising of a model HRC-3000 unit, were manufactured by Airco Coating Technology, a division of the Applicants. Cylindrical magnetrons were used to deposit the protective and dielectric layers. Each cylindrical magnetron comprised dual C-Mag (Trade Mark) model 3000 cathodes, also manufactured by Airco Coating Technology.

The targets of each cylindrical magnetron were conditioned using an inert gas, thereafter the process gas was added until the desired partial pressure was reached. The process was operated at that point until the process was stabilised. The substrate was then introduced to the coat zone of the first cylindrical magnetron and the film was applied. The substrate used for the first surface mirror was aluminium and for the second surface mirror soda lime glass was used.

When reactively sputtering silicon nitride in the cylindrical magnetron as shown in Figure 2, argon was used as an inert gas and nitrogen was used as the reactant gas. Other inert gases can be used. (All forms of silicon nitride will be represented by $Si_3N_4$.) The partial pressure of the gas was determined by the transition from the nitride mode to the metallic mode. Experiments were run as close to that transition as practicable. The pressure and flow rate of the sputtering gases were controlled by conventional devices.

Because the electrical conductivity of pure silicon is so low that it is unsuitable for sputtering with direct current, each silicon target was impregnated or doped with a small amount of aluminium. The magnet assembly of each cathode was oriented at an angle of approximately 45° from normal. With nitrogen as the sputtering gas, the coating contained a mixture of aluminium and silicon nitrides. All of these components are relatively hard and form an amorphous film that acts as a strong barrier. However, the amount of aluminium in the film did not interfere with formation of the desired silicon based compound films. The stoichiometry of the silicon nitride formed has been found to be close to the theoretical 3:4 ratio for $Si_3N_4$.

For depositing each of the $Ni\text{-}CrN_x$ film precoat layers, a planar magnetron employing a nichrome target was used. The nichrome used comprised approximately 80% nickel and 20% chromium. The gas mixture comprises approximately 60% nitrogen and 40% argon. Nickel sputtered from the nichrome target did not nitride, but the chromium sputtered apparently did. The $Ni\text{-}CrN_x$ film so produced is amorphous, chemically resistant, electrically conductive, and extremely hard and durable. It was found that with respect to the inventive mirrors, when $Ni\text{-}CrN_x$ is used, the precoat layer(s) can be approximately 40% thinner than NiCr without affecting adherence of the silver. In addition, by reducing the thickness of the second metal precoat layer for the first surface mirror and the first precoat layer for the second surface mirror, the overall reflection of visible light of each mirror increases since there is less absorption. In order to avoid sputtering excessively thick metal precoat layers, shields or baffles should be employed in the vacuum chamber of the magnetron device to intercept some of the sputtered material and to control the rate of deposition on to the substrate.

Tables 1 and 2 set forth typical process data for deposition of an inventive first and second mirrors, respectively, with the in-line magnetron system. It is recommended that the partial pressure of $H_2O$ in the system be less than or equal to $10^{-7}$ Torr. This can be accomplished by conventional means including the use of meisner-coils to condense the water, or high vacuum pumps. Other preventive measures include operating the system in nitrogen for 8 to 20 hours before reactive sputtering by back filling the system with nitrogen gas to a pressure approximately of $1\mu$m.

6

## TABLE 1

### First Surface Mirror

| Layer | Thick-ness (Å) | Flow-rate (SCCM) Ar | Flow-rate (SCCM) $N_2$ | Flow-rate (SCCM) $O_2$ | Flow-rate (SCCM) He | Poten-tial (V) | Power (kW) | Pres-sure (*) | No. Passes |
|-------|------|------|------|------|------|------|------|------|------|
| Ti | 500 | 232 | 0 | 0 | 0 | -537 | 20 | 2 | 1 |
| NiCr | 20 | 232 | 0 | 0 | 0 | -527 | 10 | 2 | 2 |
| Ag | 1200 | 154 | 0 | 0 | 0 | -531 | 10 | 2 | 1 |
| Ni-CrN$_x$ | 8 | 95 | 143 | 0 | 0 | -452 | 9.5 | 2.5 | 1 |
| Si$_3$N$_4$ | 50 | 41 | 270 | 0 | 12 | -451 | 6.5 | 2.5 | 1 |
| SiO$_2$ | 562 | 22 | 0 | 210 | 0 | -306 | 20 | 2 | 4 |
| TiO$_2$ | 543 | 10 | 0 | 102 | 0 | -402 | 17 | 2 | 16 |

Substrate used was aluminium.

## TABLE 2

### Second Surface Mirror

| Layer | Thick-ness (Å) | Flow-rate (SCCM) Ar | Flow-rate (SCCM) $N_2$ | Flow-rate (SCCM) $O_2$ | Flow-rate (SCCM) He | Poten-tial (V) | Power (kW) | Pres-sure (*) | No. Passes |
|-------|------|------|------|------|------|------|------|------|------|
| SiO$_2$ | 100 | 22 | 0 | 210 | 0 | -306 | 20 | 2 | 1 |
| Ni-CrN$_x$ | 8 | 95 | 143 | 0 | 0 | -452 | 9.5 | 2.5 | 1 |
| Ag | 1200 | 154 | 0 | 0 | 0 | -531 | 10 | 2 | 1 |
| Ni-CrN$_x$ | 20 | 95 | 143 | 0 | 0 | -452 | 9.9 | 2.5 | 2 |
| Si$_3$N$_4$ | 50 | 41 | 270 | 0 | 12 | -451 | 6.5 | 2.5 | 1 |

Substrate used was soda lime glass (2.5 mm)

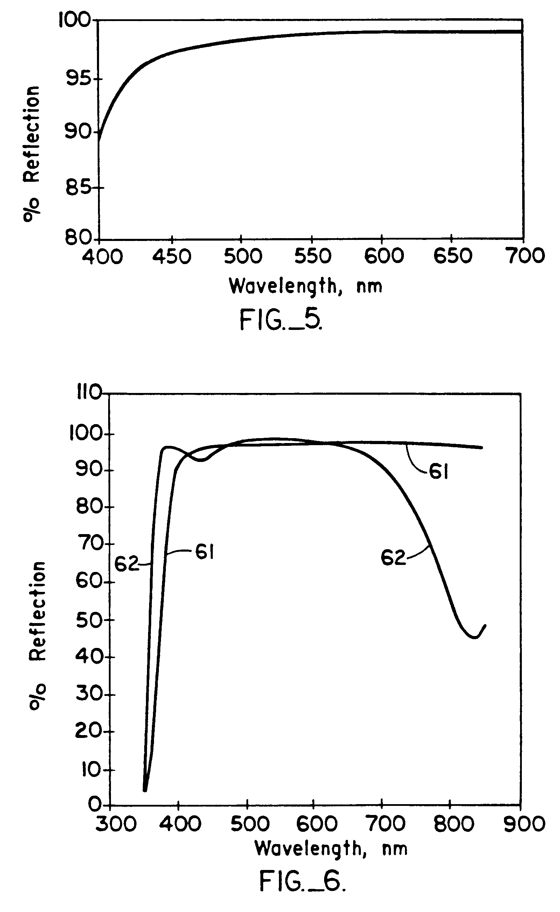

Figure 5 is a graph of the percent reflectance for the inventive first surface mirror produced under the conditions set forth in Table 1 measured against the wavelength of radiation over the visible spectrum. Reflectance was measured at a 10 degree angle of incidence.

Similarly, Figure 6 is a graph of reflectance versus wavelength of radiation for another embodiment of the inventive first surface mirror as compared to a conventional second surface mirror. This inventive first surface mirror (whose reflectance is represented by curve 61) had the following structure:

Glass/NiCr/Ag/NiCr/Si$_3$N$_4$/TiO$_2$

(2.5mm/100Å/900Å/14Å/391Å/767Å)

whereas the conventional first surface mirror (whose reflectance is represented by curve 62) had the following structure:

Glass/Al/SiO$_2$/TiO$_2$/SiO$_2$/TiO$_2$

(2.5mm/700Å/729Å/473Å/1170Å/740Å)

As is apparent, this embodiment of the inventive first surface mirror did not have a separate SiO$_2$ layer between the protective Si$_3$N$_4$ layer and the high index TiO$_2$ as in the embodiment set forth in Table 1. Moreover, because the substrate was glass, no bonding layer was needed.

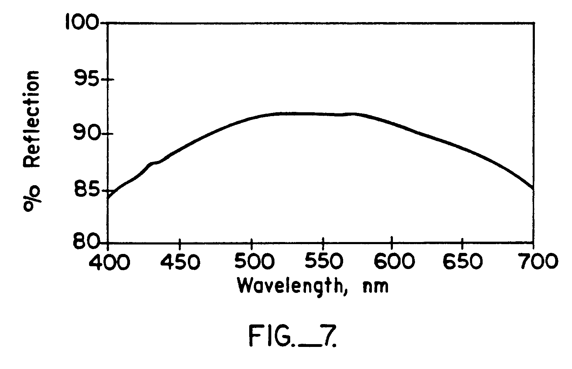

Figure 7 is a graph of the percent reflectance for the inventive second surface mirror produced under the conditions set forth in Table 2 against the wavelength of radiation over the visible spectrum. Reflectance was measured at a 10 degree angle of incidence.

As is apparent, the inventive first surface mirrors achieved an integrated visible reflectance of approximately 97% and the inventive second surface mirror achieved an integrated visible reflectance of approximately 88%. For the second surface mirror, the percentage reflectance will depend on the thickness of the substantially transparent substrate. For instance, a 6 mm thick glass substrate will reduce reflectance about 2% relative to a 3 mm thick glass substrate.

**Claims**

1. A first or second surface mirror comprising in order:
   a substrate;
   a first metal precoat layer;
   a reflective metal layer;
   a second metal precoat layer; and
   a protective layer,
   characterised in that the first metal precoat layer comprises nickel and chromium or chromium nitride and the second metal precoat layer comprises nickel and chromium or chromium nitride.

2. A first surface mirror as defined in Claim further comprising in order a first dielectric layer having a refractive index of approximately 1.65 or less and a second dielectric layer having a refractive index of approximately 2.0 or greater.

3. A first surface mirror as defined in Claim 1 wherein the protective layer has a refractive index of approximately 1.65 or less, and wherein the mirror further comprises a dielectric layer having a refractive index of approximately 2.0 or greater.

4. A first surface mirror as defined in Claim 2 or 3 wherein the substrate is aluminium and the mirror further comprises a titanium bonding layer situated between the substrate and the first metal precoat layer.

5. A first surface mirror as defined in any preceding claim wherein the second metal precoat layer comprises nickel and chromium nitride and has a thickness of approximately 0.5 to 2 nm (5 to 20 Å).

6. A second surface mirror as defined in Claim 1 wherein the substrate is substantially transparent and the mirror further comprises a substantially transparent barrier layer situated between the substrate and the first metal precoat layer.

7. The second surface mirror as defined in Claim 6 wherein the barrier layer comprises silicon dioxide.

8. The second surface mirror as defined in Claim 6 or 7 wherein the first metal precoat layer comprises nickel and chromium nitride and has a thickness of approximately 0.5 to 2 nm (5 to 20 Å).

9. A mirror as defined in any preceding claim wherein the protective layer comprises silicon nitride.

10. A mirror as defined in any preceding claim where in the reflective metal layer comprises silver having a thickness of 90 nm (900Å) or more.

( PRIOR ART )

FIG._1.

FIG._2.

FIG._3.

FIG._4.

FIG._5.

FIG._6.

FIG.__7.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | THIN SOLID FILMS, vol.83, no.4, 1981 page 415 S.M.WONG ET AL. 'PROTECTIVE COATINGS FOR SILVERED REFLECTORS FOR SOLAR APPLICATIONS' * the whole document * | 1 | G02B5/08 G02B1/10 |
| A | OPTICAL ENGINEERING, vol.32, no.3, March 1993, BELLINGHAM US pages 547 - 552 K.H.GUENTHER ET AL. 'CORROSION-RESISTANT FRONT SURFACE ALUMINUM MIRROR COATINGS' * abstract; figure 1 * | 1 | |
| A | EP-A-0 239 280 (R.G.GORDON) * claim 14; figures 1,2 * | 1 | |

TECHNICAL FIELDS
SEARCHED     (Int.Cl.5)

G02B

The present search report has been drawn up for all claims

| Place of search | Date of completion of the search | Examiner |
|---|---|---|
| THE HAGUE | 17 June 1994 | Malic, K |